(19) Europäisches Patentamt

European Patent Office

Office européen des brevets

(11) EP 1 752 481 A1

(12) EUROPEAN PATENT APPLICATION
published in accordance with Art. 158(3) EPC

(43) Date of publication:
14.02.2007 Bulletin 2007/07

(51) Int Cl.:
C08G 18/42 (2006.01)      C08G 18/66 (2006.01)
C08G 63/664 (2006.01)

(21) Application number: 05743361.7

(22) Date of filing: 30.05.2005

(86) International application number:
PCT/JP2005/009906

(87) International publication number:
WO 2005/116102 (08.12.2005 Gazette 2005/49)

(84) Designated Contracting States:
DE FR GB IT

(30) Priority: 31.05.2004 JP 2004161664
20.10.2004 JP 2004305397

(71) Applicant: Asahi Glass Company, Limited
Chiyoda-ku, Tokyo 100-8405 (JP)

(72) Inventors:
• NAKAMURA, Makito
c/o Asahi Glass Urethane Co, Ltd
Ibaraki 3140195 (JP)

• WADA, Hiroshi
c/o Asahi Glass Urethane Co., Ltd.,
Ibaraki 3140195 (JP)

(74) Representative: Hartz, Nikolai
Wächtershauser & Hartz
Weinstrasse 8
80333 München (DE)

(54) POLYURETHANE ELASTOMER AND METHOD FOR PRODUCING SAME

(57) The present invention provides a method for producing a thermoplastic polyurethane elastomer having excellent heat resistance and mechanical properties, and capable of obtaining one having a low hardness without using a plasticizer.

A method for producing a polyurethane elastomer, which comprises reacting a polyol compound and a polyisocyanate compound, **characterized by** using, as all or part of the above polyol compound, a polyester ether polyol (A) obtainable by ring-opening polymerization of a mixture of an alkylene oxide and a lactone monomer with an initiator.

EP 1 752 481 A1

**Description**

TECHNICAL FIELD

The present invention relates to a method for producing a polyurethane elastomer and a polyurethane elastomer produced by the method.

BACKGROUND ART

Heretofore, a method is known to produce a polyurethane elastomer by reacting a polyisocyanate compound with a polyol compound selected from the group consisting of a polyoxyalkylene polyol such as polyoxytetramethylene diol or polyoxypropylene polyol, a polyester polyol and the like, followed by reacting an isocyanate-terminated polyurethane prepolymer thus obtainable with a chain extender and/or a curing agent.

As such polyurethane elastomers, a thermosetting polyurethane elastomer and a thermoplastic polyurethane elastomer are known, and among them, a polyurethane elastomer having a thermoplasticity imparted by adjusting the number of functional groups of reaction components, is called a thermoplastic polyurethane elastomer. Such a thermoplastic polyurethane elastomer is usually produced by using bifunctional components as raw materials. It is possible to process such a thermoplastic polyurethane elastomer into a variety of products by means of e.g. injection molding or blow molding of a resin in a molten state by heating, by use of an extruder or other resin processing machines. The thermoplastic polyurethane elastomer is industrially used for various applications for e.g. gaskets and sealing materials, medical appliances, ski shoes and conveyer rollers.

The polyol compound as a raw material to be used for a thermoplastic polyurethane elastomer is usually a polyoxytetramethylene diol or a polyester diol. A polyoxypropylene diol, and a polyether diol essentially consisting of oxypropylene units and oxyethylene units, are hardly used practically in the production of the thermoplastic polyurethane elastomer, due to their poor heat resistance. In an attempt to use a polyether diol such as a polyoxypropylene diol for a thermoplastic polyurethane elastomer, there has been also a proposal of a thermoplastic polyurethane elastomer to be produced by using a polyoxypropylene polyol or a polyoxypropyleneoxyethylene diol having a low monool content, which is prepared by using a composite metal cyanide complex as a catalyst. However, the heat resistance of the polyurethane elastomer obtainable was insufficient (see, for example, Patent Documents 1, 2 and 3).

On the other hand, a polyurethane elastomer produced by using a polyoxytetramethylene diol, a polyisocyanate compound, and a chain extender and/or a curing agent, as raw materials, is excellent in the elongation property, the impact resilience and the water resistance, whereby it has been used for various applications. However, depending upon the applications, it is required to use a polyurethane elastomer having lower hardness and higher flexibility than heretofore, and especially, it is strongly required to use a thermoplastic polyurethane elastomer having flexibility and lower hardness. In order to lower the hardness of the thermoplastic polyurethane elastomer produced by using a polyoxytetramethylene diol as a raw material, a method of using a polyoxytetramethylene diol having a large molecular weight, is conceivable. However, among polyoxytetramethylene diols, even the maximum one which is presently available as having the largest molecular weight is one having a molecular weight of about 3,000, and even when such one is used, it was difficult to sufficiently lower the hardness of the thermoplastic polyurethane elastomer obtainable.

Further, a thermoplastic polyurethane elastomer produced by using a polyester diol, a polyisocyanate compound, and a chain extender and/or a curing agent, as raw materials, is excellent in the elongation property, the impact resilience, etc. However, with regard to the lower limit of the hardness, it was at least possible to obtain hardness (also referred to Shore A hardness) of 70 by a type A durometer defined by JIS K 6253, and further, there was a defect such that the water resistance was poor. For the purpose of improving the water resistance of such a thermoplastic polyurethane elastomer, there has been a proposal of a method for producing a thermoplastic polyurethane elastomer by using a polyoxypropylene polyol having a low monool content and a polyester polyol as a caprolactone ring-opening polymer, in combination (cf. Patent Documents 4 and 5). Further, trials have been made for producing a thermoplastic polyurethane resin by using a polyol compound obtainable by addition-reacting a lactone to a polyoxypropylene diol, a polyoxytetramethylene diol or a polyester diol (cf. Patent Documents 6, 7, 8 and 9). However, a compound obtained by ring-opening addition of a lactone monomer to the terminals of such a diol, is usually in the solid state and thus has a defect such that the working efficiency drastically deteriorates at the time of producing the thermoplastic polyurethane elastomer. Further, as a method for obtaining a thermoplastic polyurethane elastomer having low hardness, a method of adding a plasticizer such as diisononyl phthalate to the elastomer is known. However, when such a method is employed, the plasticizer in the thermoplastic polyurethane is likely to bleed out at the time of exposing it at a high temperature in summer season, whereby there was a case where the hardness tended to increase.

The thermoplastic polyurethane elastomer produced by using, a polycarbonate diol, a polyisocyanate compound, and a chain extender and/or a curing agent, as raw materials, is excellent in mechanical properties such as tensile strength and tear strength, as well as in heat resistance, water resistance, chemical resistance, etc. However, the polyurethane elastomer using such raw materials usually has high hardness, and one having Shore A hardness of less than 70 is not obtained. Further, the polycarbonate diol has a high crystallinity and high viscosity, and therefore, in a case where e.g. preparation of the prepolymer is carried out by using it, there is a problem such that the working efficiency will be poor due to high viscosity of the prepolymer.

Further, it is reported that a polyester ether polyol can be produced by copolymerizing a lactone monomer and an alkylene oxide by using a composite metal cyanide complex as a catalyst (cf. Patent Documents 10 and 11). However, the molecular structure thereof is limited, and the characteristics, the preferred applications, etc. of a polyurethane elastomer produced by using it are not reported at all. Further, it has not been known what molecular structure and molecular weight of the polyester ether polyol are suitable for the polyurethane elastomer, particularly for the thermoplastic polyurethane elastomer, and also it has not been known what characteristics are obtainable in such a case.

Patent Document 1: JP-A-6-502674
Patent Document 2: JP-A-7-504702
Patent Document 3: JP-A-7-507344
Patent Document 4: JP-A-1-56088
Patent Document 5: JP-A-2001-500167
Patent Document 6: JP-A-55-160016
Patent Document 7: JP-A-58-59213
Patent Document 8: JP-A-1-157516
Patent Document 9: JP-A-06-206995
Patent Document 10: Specification of U.S.P. 5032671
Patent Document 11: JP-A-2003-504468

DISCLOSURE OF THE INVENTION

OBJECT TO BE ACCOMPLISHED BY THE INVENTION

It is an object of the present invention to provide a method for producing a polyurethane elastomer which is excellent in heat resistance and mechanical properties and which can be obtained as one having low hardness without employing a plasticizer, by using, as a raw material, a polyol compound which can readily be handled at room temperature, and a polyurethane elastomer produced by the production method. Particularly, it is an object of the present invention to provide a production method capable of obtaining a polyurethane elastomer excellent in mechanical properties in spite of low hardness, by using, as a raw material, a polyol compound obtained by randomly reacting an alkylene oxide and a lactone monomer with, as an initiator, a polyol having a high crystallinity.

MEANS TO ACCOMPLISH THE OBJECT

The present invention provides the following:

A method for producing a polyurethane elastomer, which comprises reacting a polyol compound and a polyisocyanate compound, characterized by using, as all or part of the above polyol compound, a polyester ether polyol (A) (hereinafter also referred to simply as polyol (A)) obtainable by ring-opening polymerization of a mixture of an alkylene oxide and a lactone monomer with an initiator.

A method for producing a polyurethane elastomer, which comprises reacting a polyol compound and a polyisocyanate compound, characterized by using, as all or part of the above polyol compound, a polyester ether polyol (A) obtainable by ring-opening polymerization of a mixture of an alkylene oxide and a lactone monomer with an initiator of at least one polyol selected from the group consisting of the following (p), (q) and (r):

(p): polyoxytetramethylene polyol,
(q): polyoxyethylene polyol and
(r): a polyol other than (p) and (q), which is solid at room temperature and has a molecular weight as calculated by hydroxyl value per hydroxyl group of from 150 to 5,000.

Here, in the present invention, it is possible to react a chain extender and/or a curing agent together with the polyol compound and the polyisocyanate compound, as the case requires.

Further, as the polyol (r), it is preferred to use at least one member selected from the group consisting of a polyester polyol and a polycarbonate polyol.

Further, in the above each production method, it is preferred to carry out copolymerization of the above mixture of an alkylene oxide and a lactone monomer by using a composite metal cyanide complex as a catalyst.

Further, in the above each production method, it is preferred that the polyol (p) and/or the polyol (q) has a molecular weight as calculated by hydroxyl value per hydroxyl group of from 150 to 5,000.

Further, in the above each production method, it is preferred that the weight average molecular weight (Mw) /the number average molecular weight (Mn) of the above polyol (A) is from 1.02 to 2.00, and the polyol (A) has a total unsaturation degree of at most 0.07 and a molecular weight as calculated by hydroxyl value per hydroxyl group of from 170 to 16,500.

The polyurethane elastomer of the present invention is one produced by the above production method, characterized in that its hardness by a type A durometer defined by JIS K 6253 is from 30 to 70.

Here, the above weight average molecular weight (Mw) and the number average molecular weight (Mn) are respectively meant for a weight average molecular weight and a number average molecular weight as calculated as polystyrene, which are measured by a gel permeation chromatography method (GPC).

Further, the above hydroxyl value (OHv, unit: mgKOH/g) is meant for a hydroxyl value measured in accordance with JIS K1557 6.4.

Further, the above total unsaturation degree (meq/g) is meant for an amount (mmol) of unsaturated groups contained per 1 g of a compound, which is measured in accordance with JIS K1557 6.7.

Further, the above molecular weight as calculated by hydroxyl value of the polyol is meant for a value calculated by the following formula based on the number of hydroxyl groups in the polyol:

```
Molecular weight as calculated by hydroxyl value =

(56,100/OHv) × the number of hydroxyl groups in polyol
```

EFFECT OF THE INVENTION

According to the present invention, it is possible to obtain a polyurethane elastomer having low hardness and flexibility, and yet being excellent in moldability, heat resistance and hydrolysis resistance.

BEST MODE FOR CARRYING OUT THE INVENTION

As mentioned above, the present invention is a method for producing a polyurethane elastomer, which comprises reacting a polyol compound and a polyisocyanate compound, or reacting these compounds further with a chain extender and/or a curing agent as the case requires, characterized by using, as all or part of the polyol compound, a polyol compound obtainable by ring-opening polymerization of a mixture of an alkylene oxide and a lactone monomer with an initiator. Now, the respective raw materials to be used for the method for producing a polyurethane elastomer of the preset invention, and the production method, as well as characteristics, etc. of the polyurethane elastomer obtainable, will be described. Here, in the present invention, the polyol compound is meant for a compound having at least two hydroxyl groups on average per molecule.

Polyester Ether Polyol (A)

In the present invention, it is possible to obtain a polyester ether polyol (A), as all or part of the polyol compound, by ring-opening addition of a mixture of an alkylene oxide and a lactone monomer to an initiator, by using a polymerization catalyst as the case requires, in the presence of the initiator. Firstly, the initiator, the alkylene oxide, the lactone monomer and the catalyst, to be used for producing the polyol (A), as well as preferred structures, etc. of the polyol (A), will be described, and then production conditions will be described.

Initiator

As the above initiator, it is preferred to use a compound having 2 to 8 active hydrogen atoms per molecule. The number of active hydrogen atoms in the initiator is equal to the number of hydroxyl groups in a polyol (A) obtainable. The number of active hydrogen atoms in the initiator is preferably 2 to 4, most preferably 2 per molecule. The number of active hydrogen atoms in the initiator is equal to the number of hydroxyl groups in the polyol (A) obtainable, and therefore the number of hydroxyl groups in the polyol (A) is preferably 2 to 8, more preferably 2 to 4, most preferably 2.

The compound having active hydrogen atoms may, for example, be an alcohol, an amine or a mercaptan. The preferred specific initiator may, for example, be a dihydric alcohol such as ethylene glycol, diethylene glycol, polyethylene glycol, propylene glycol, dipropylene glycol or 1,4-butanediol; a trihydric alcohol such as trimethylolpropane, trimethylolethane or glycerin; a tetrahydric alcohol such as pentaerythritol; a hexahydric alcohol such as sorbitol or dipentaerythritol; an octahydric alcohol such as tripentaerythritol or sucrose; a diamine such as ethylenediamine, hexamethylenediamine or tolylenediamine; an alkanolamine such as monoethanolamine, propanolamine or diethanolamine; a phenol such as bisphenol A; or a polyether polyol obtained by adding an alkylene oxide to such a compound, which has a molecular weight as calculated by hydroxyl value per hydroxyl group of from 150 to 1,500 (hydroxyl value: 37 to 374 mgKOH/g), more preferably from 200 to 1,500 (hydroxyl value: 37 to 280 mgKOH/g).

There is a case where it is difficult to obtain a polyurethane elastomer with low hardness, but since it is possible to obtain a polyurethane elastomer having better mechanical strength, it is also possible to use, as the initiator, (p): polyoxytetramethylene polyol, (q): polyoxyethylene polyol and/or (r): a polyol other than (p) and (q), which is solid at room temperature and has a molecular weight as calculated by hydroxyl value per hydroxyl group of from 150 to 5,000 (namely, hydroxyl value: 11 to 374 mgKOH/g). By using such a compound as the initiator, it is possible to obtain a polyol having a structure having a block portion with high crystallinity and cohesive strength, namely a polyol portion with high crystallinity of the initiator, and further having a random polymerization chain of an alkylene oxide with a caprolactone, namely a portion with low crystallinity. It is thereby possible to obtain a polyurethane elastomer with low hardness and excellent flexibility, while having a blocked portion with high crystallinity and cohesive strength. Hereinafter, the polyols (p), (q) and (r) will be generally referred to also as a crystalline polyol.

The polyoxytetramethylene polyol (p) may, for example, be a polyol obtainable by ring-opening polymerization of tetrahydrofuran (THF) by using a catalyst selected from the group consisting of zeolite, metalloaluminosilicate, a superstrong acid such as fluorosulfonic acid, a mixture of an acid and acetic anhydride, a perfluorosulfonic resin, a bleaching clay and a heteropolyacid having an amount of water of crystallization controlled to the specific range. Polyoxytetramethylene diol is most preferred.

The polyoxyethylene polyol (q) may, for example, be polyoxyethylene glycol obtainable by ring-opening addition polymerization of ethylene oxide, in the presence of a bivalent initiator such as ethylene glycol.

The polyol (r) as a polyol other than (p) and (q), which is solid at room temperature and has a molecular weight as calculated by hydroxyl value per hydroxyl group of from 150 to 5,000, is meant for a polyol having a melting point of at least 25°C. The polyol (r) may, for example, be a polyester polyol, a polycarbonate polyol or a copolymer of THF and ethylene oxide (EO).

(i) Polyester Polyol

The polyester polyol is preferably a polyester polyol obtainable by a condensation reaction of a polyhydric alcohol and a polybasic carboxylic acid, or a polyester polyol obtainable by ring-opening addition of a cyclic ester (lactone) to a polyhydric alcohol as an initiator.

As the above polyhydric alcohol, a dihydric alcohol (diol) is particularly preferred, and a trihydric or higher hydric alcohol may be used in combination. The above diol may, for example, be ethylene glycol, diethylene glycol, propylene glycol, dipropylene glycol, 1,3-propanediol, 1,4-butanediol, neopentyl glycol, 1,5-pentanediol, 3-methyl-1,5-pentanediol, 1,6-hexanediol, 1,9-nonanediol, 2-methyl-1,8-octanediol, cyclohexanediol or dichlohexanedimethanol. They may be used alone or two or more of them may be used in combination.

As the above polybasic carboxylic acid, a dibasic carboxylic acid (dicarboxylic acid) is particularly preferred, but tribasic or higherbasic carboxylic acid may be used in combination. The above dicarboxylic acid is preferably an aliphatic dicarboxylic acid such as succinic acid, glutaric acid, adipic acid, pimelic acid, suberic acid, azelaic acid, sebacic acid, decamethylene dicarboxylic acid or dodecamethylene dicarboxylic acid. Further, an aromatic dicarboxylic acid such as terephthalic acid, isophthalic acid, 1,5-naphthalic acid or 2,6-naphthalic acid may be used in combination. Further, an acid anhydride may also be used. They may be used alone or two or more of them may be used in combination.

The above lactone may, for example, be ε-caprolactone, γ-valerolactone, δ-valerolactone, β-methyl-5-valerolactone or butyrolactone. They may be used alone or two or more of them may be used in combination. ε-caprolactone is particularly preferred.

The polyester polyol to be used in the present invention is preferably a polyester diol. A polycaprolactone polyol is more preferred, and especially, polycaprolactone diol is particularly preferred.

Further, the polyester polyol to be used in the present invention may have a carboxylic acid type terminal structure, but most of the functional groups at the terminals are preferably hydroxyl groups. Specifically, the acid value of the polyester polyol is preferably at most 2 mgKOH/g.

(ii) Polycarbonate Polyol

The above polycarbonate polyol may, for example, be one obtainable by ring-opening polymerization of an alkylene carbonate, or one obtainable by transesterification of a diol compound with a chloroformate, a dialkyl carbonate or a diaryl carbonate, or by a reaction of a diol compound and phosgene. The above diol compound may, for example, be ethylene glycol, diethylene glycol, propylene glycol, dipropylene glycol, 1,2-propanediol, 1,3-propanediol, 2-methyl-1,3-butanediol, 1,4-butanediol, neopentyl glycol, 1,5-pentanediol, 2-methylpentanediol, 3-methylpentanediol, 2,2,4-trimethyl-1,6-hexanediol, 3,3,5-trimethyl-1,6-hexanediol, 2,3,5-trimethylpentanediol, 1,6-hexanediol, 1,9-nonanediol or 2-methyl-1,8-octanediol. Further, one having a small amount of a compound having at least 3 hydroxyl groups per molecule, such as trimethylolethane, trimethylolpropane, hexanetriol or pentaerythritol, added to the above diol compound, may be mentioned. The above alkylene carbonate may be ethylene carbonate or propylene carbonate. The above dialkyl carbonate may be dimethyl carbonate or diethyl carbonate. The above diaryl carbonate may be diphenyl carbonate. Commercially available polyethylene carbonate polyol, polytetramethylene carbonate polyol or polyhexamethylene carbonate polyol may, for example, be also used.

Further, as the polyol (p), (q) or (r) to be used as the initiator, the lower limit of the molecular weight as calculated by hydroxyl value per hydroxyl group of the polyol, is preferably 150 (hydroxyl value: at most 374 mgKOH/g), more preferably 200 (hydroxyl value: at most 280 mgKOH/g), most preferably 250 (hydroxyl value: at most 220 mgKOH/g). The upper limit thereof is preferably 5,000 (hydroxyl value: at least 11 mgKOH/g), more preferably 3,000 (hydroxyl value: at least 18 mgKOH/g), further preferably 2,000 (hydroxyl value: at least 28 mgKOH/g), particularly preferably 1,500 (hydroxyl value: at least 37 mgKOH/g).

Alkylene Oxide

In the present invention, the alkylene oxide to be polymerized together with the lactone monomer in the presence of an initiator, is preferably a $C_{2-4}$ alkylene oxide. Such an alkylene oxide may, for example, be propylene oxide, 1,2-butylene oxide, 2,3-butylene oxide or ethylene oxide. The alkylene oxide may be used alone or two or more of them may be used in combination. In the production method of the present invention, it is preferred that ethylene oxide is used alone, propylene oxide is used alone, ethylene oxide and propylene oxide are used in combination, or propylene oxide and another alkylene oxide are used in combination.

Lactone Monomer

The lactone monomer to be used in the production method of the present invention may, for example, be ε-caprolactone, γ-valerolactone, 5-valerolactone, β-methyl-δ-valerolactone or butyrolactone, and ε-caprolactone is particularly preferred.

Catalyst

In the present invention, a polymerization catalyst is preferably used in the ring-opening copolymerization, since it is thereby possible to increase the rate of the ring-opening copolymerization at the time of the ring-opening copolymerization of the mixture of an alkylene oxide and a lactone monomer. The polymerization catalyst may, for example, be an alkali catalyst such as potassium hydroxide or cesium hydroxide, a composite metal cyanide complex or a phosphazene catalyst. Especially, it is particularly preferred that the composite metal cyanide complex is used as the catalyst for copolymerization, since it is thereby possible to obtain a polyol having a narrow molecular weight distribution. The composite metal cyanide complex may, for example, be a zinc hexacyanocobaltate complex.

Chemical Composition and Production Conditions of Polyol (A)

As mentioned above, it is possible to produce the polyol (A) of the present invention by adding a mixture of an alkylene oxide and a lactone monomer to the initiator, followed by polymerization in the presence of a polymerization catalyst as the case requires. By means of ring-opening polymerization of the mixture of an alkylene oxide and a lactone monomer, both of them may randomly be copolymerized, whereby it is possible to obtain a polyester ether polyol having a random copolymerization chain.

In the present invention, in the above copolymerization, (the molar amount of the alkylene oxide/the molar amount of the lactone monomer) is preferably from 5/95 to 95/5, more preferably from 10/90 to 95/5 (total being 100). By using a polyol produced by adjusting the proportion of the lactone monomer based on the total of the alkylene oxide and the lactone monomer to be at least 5 mol%, it is possible to obtain a polyurethane elastomer excellent in the heat resistance, the tensile strength and the tear strength, and further, it is possible to lower the viscosity of the polyol obtainable, and also it is possible to obtain a polyurethane elastomer with low hardness.

Further, in a case where the above crystalline polyol is used as the initiator, (the molar amount of the alkylene oxide/the molar amount of the lactone monomer) is more preferably 20/80 to 95/5, particularly preferably 35/65 to 85/15. In a case where one other than the above crystalline polyol is used as the initiator, (the molar amount of the alkylene oxide/the molar amount of the above lactone monomer) is particularly preferably 20/80 to 80/20.

Further, the weight average molecular weight (Mw)/the number average molecular weight (Mn) of the polyol (A) in the present invention is preferably from 1.02 to 2.00. By adjusting the above Mw/Mn to be at most 2.00, the polyol obtainable can be made to have a low viscosity. Mw/Mn can be made to fall in the above preferred numerical range, by controlling the type of the initiator, the number average molecular weight (Mn), Mw/Mn of the initiator, the type and the amount of the catalyst to be used in polymerization reaction, the amounts of the alkylene oxide and the lactone monomer to be polymerized and the polymerization reaction conditions. Especially, in a case where a compound other than the above crystalline polyol is used as the initiator, the weight average molecular weight (Mw)/the number average molecular weight (Mn) is preferably from 1.02 to 1.30.

Further, the total unsaturation degree of the above polyol (A) is preferably at most 0.07 meq/g, more preferably at most 0.04 meq/g. When the total unsaturation degree is at most 0.07 meq/g, it is possible to improve the heat resistance, the tensile strength and the tear strength of the polyurethane elastomer produced by using such a polyol as a raw material. The method for adjusting the total unsaturation degree of the polyol (A) to be at most 0.07 meq/g may, for example, be a method for producing a polyol by using a composite metal cyanide complex catalyst, and such a method is preferred.

Further, the above polyol (A) preferably has a molecular weight as calculated by hydroxyl value per hydroxyl group of from 170 to 16,500 (namely, hydroxyl value: 3.4 to 330 mgKOH/g). By adjusting the molecular weight as calculated by hydroxyl value per hydroxyl group to be at least 170, it is possible to lower the hardness of the polyurethane elastomer produced by using such a polyol as a raw material, and by adjusting it to be at most 16,500, the polyol (A) can be made to have a low viscosity. Adjustment of the molecular weight as calculated by hydroxyl value per hydroxyl group to be within the above preferred range, can readily be carried out by suitably adjusting the molar amounts of the lactone monomer and the alkylene oxide which are to be polymerized with the initiator.

At that time, the upper limit is preferably 9,000 (hydroxyl value: at least 6 mgKOH/g), more preferably 5,500 (hydroxyl value: at least 10 mgKOH/g), most preferably 3,500 (hydroxyl value: at least 16 mgKOH/g).

Further, in a case where the above crystalline polyol is used as the initiator, the lower limit of the molecular weight as calculated by hydroxyl value per hydroxyl group is preferably 500 (hydroxyl value: at most 112 mgKOH/g), more preferably 700 (hydroxyl value: at most 80 mgKOH/g). Further, in a case where a compound other than the above crystalline polyol is used as the initiator, the lower limit of the molecular weight as calculated by hydroxyl value per hydroxyl group is preferably 300 (hydroxyl value: at most 187 mgKOH/g), more preferably 500 (hydroxyl value: at most 112 mgKOH/g), most preferably 700 (hydroxyl value: at most 80 mgKOH/g).

Further, with regard to the polyol (A) in the present invention, the value obtained by deducting from the molecular weight as calculated by hydroxyl value, the molecular weight of the initiator and then dividing the remaining molecular weight by the number of functional groups of the initiator, is preferably from 140 to 15,000. By adjusting the above value to be at least 140, it is possible to improve the heat resistance, the tensile strength and the tear strength of the polyurethane elastomer obtainable by using the polyol (A), and by adjusting the value to be at most 15,000, it is possible to lower the hardness of the polyurethane elastomer obtainable. Adjustment of the above value to be within such a preferred range, can readily be carried out by suitably adjusting the molar amounts of the lactone monomer and the alkylene oxide to be polymerized with the initiator, likewise adjustment of the above molecular weight as calculated by hydroxyl value. Here, the above expression "the value obtained by deducting from the molecular weight as calculated by hydroxyl value, the molecular weight of the initiator and then dividing the remaining molecular weight by the number of functional groups of the initiator" is chemically meant for the molecular weight per one random copolymer chain formed by copolymerization of the alkylene oxide and the lactone monomer.

Further, the upper limit of this value is preferably 7,500, more preferably 4,000, most preferably 2,000. Further, the lower limit of this value is preferably 250, more preferably 500, in a case where a crystalline polyol is used as the initiator. In a case where a compound other than the crystalline polyol is used as the initiator, the lower limit of this value is preferably 200, more preferably 250, most preferably 500.

Production Conditions

With regard to e.g. the temperature, pressure and time as specific conditions for production of the polyol (A) in the present invention, it is possible to suitably define preferred conditions. For example, in a case where the above polymerization reaction is carried out by using a composite metal cyanide complex as a catalyst, the polymerization reaction temperature may be from 100 to 160°C as a preferred condition, but is not limited thereto.

Polyol Compound Other Than Polyester Ether Polyol

As the polyol compound to be used as a raw material for the polyurethane elastomer of the present invention, together with the above polyester ether polyol (A), other polyol compounds may be used. Such other polyol compounds may be compounds containing hydroxyl groups in their terminals, such as a polyoxytetramethylene glycol, a polyester polyol (including a polyol obtainable by polymerizing a lactone such as caprolactone) and a polycarbonate diol. Together with the polyol (A) as a raw material for the polyurethane elastomer of the present invention, at least one of the above polyols may be used within a range not to impair the effect of the present invention. Such a polyol to be used together with the polyol (A), is preferably one having a molecular weight as calculated by hydroxyl value of from 561 to 11,220 (hydroxyl value: 5 to 100 mgKOH/g), more preferably one having a molecular weight of from 935 to 11,220 (hydroxyl value: 5 to 60 mgKOH/g). When the molecular weight as calculated by hydroxyl value is at most 11,220 (hydroxyl value: at least 5 mgKOH/g), a prepolymer obtainable can be made to have a low viscosity, and when the molecular weight as calculated by hydroxyl value is at least 561 (hydroxyl value: at most 100 mgKOH/g), it is possible to obtain a polyurethane elastomer excellent in the tensile strength.

In a case where the polyol (A) and such other polyols are used in combination, their ratio (polyol (A)/other polyols) is preferably from 100/0 to 20/80 particularly preferably from 100/0 to 50/50, by mass. When the above ratio is adjusted so that the former is larger than 20/80, it is possible to improve the tensile strength of a polyurethane elastomer obtainable. However, it is most preferred that the polyester ether polyol (A) is used solely as the polyol compound in the present invention, since it is thereby possible to obtain a polyurethane elastomer with low hardness. Polyisocyanate Compound

The polyisocyanate compound to be used in the present invention is not particularly limited. For example, an aromatic polyisocyanate compound such as 4,4'-diphenylmethane diisocyanate, naphthalene-1,5-diisocyanate, polyphenylene polymethylene polyisocyanate, 2,4-tolylene diisocyanate or 2,6-tolylene diisocyanate; an aralkyl polyisocyanate compound such as xylylene diisocyanate or tetramethyl xylylene diisocyanate; an aliphatic polyisocyanate compound such as hexamethylene diisocyanate; an alicyclic polyisocyanate compound such as isophorone diisocyanate or 4,4'-methylenebis(cyclohexyl isocyanate); or a urethane-, bullet-, allophanate-, carbodiimide- or isocyanurate-modified product obtainable from the above polyisocyanate compound may, for example, be mentioned. Since the reactivity with the polyol compound is excellent and the viscosity of an isocyanate-terminated prepolymer obtainable is usually low, the polyisocyanate compound to be used in the present invention is preferably an aromatic diisocyanate, and especially diphenylmethane diisocyanate is preferred.

Chain Extender and Curing Agent

In the method for producing a polyurethane elastomer of the present invention, a chain extender and/or a curing agent may or may not be used. In the field of polyurethane techniques, the chain extender and curing agent are known raw materials. Usually, the chain extender is meant for a compound of a relatively low molecular weight, having, per molecule, two functional groups which can be addition-reacted to isocyanate groups. The curing agent is meant for a compound of relatively low molecular weight, having, per molecule, at least three functional groups which can undergo addition reaction with isocyanate groups. The molecular weight is preferably at most 1,122, more preferably at most 1,000, particularly preferably at most 600.

Chemical structures of the chain extender and/or curing agent of the present invention are not particularly limited, and specifically, the following may be mentioned. The chain extender may, for example, be a diol such as ethylene glycol, diethylene glycol, triethylene glycol, propylene glycol, dipropylene glycol, tripropylene glycol, 1,4-butanediol, 1,6-hexanediol, neopentyl glycol, 1,4-cyclohexanedimethanol or 1,4-dihydroxycyclohexane. In the present invention, among them, ethylene glycol, propylene glycol, 1,4-butanediol and 1,6-hexanediol are preferred, and 1,4-butanediol is particularly preferred. As the chain extender, an amine chain extender may be used other than such diol compounds. Particularly, a preferred amine chain extender may be an aromatic amine such as a variety of isomers and derivatives of toluenediamine, or methylenedianiline. Especially, such a chain extender may be an aromatic amine having substituents such as 4,4'-methylenebis(2-chloroaniline), 4,4'-methylenebis(3-chloro-2,6-diethylaniline), diethyltoluenediamine and methylenedianiline, which undergoes addition reaction relatively slowly with an isocyanate group due to an electron or steric effect. Whereas, the curing agent may, for example, be a polyfunctional polyol or polyamine such as glycerin, trimethylolpropane, diethanolamine or triethanolamine. In the case of producing a thermoplastic polyurethane elastomer, it is preferred that only the chain extender is used and no curing agent is used, but a small amount of the curing agent may be used in combination so long as the thermoplasticity can be maintained.

Production Method of Polyurethane Elastomer

The polyurethane elastomer of the present invention can be produced by reacting the above polyester ether polyol (A) or a polyol compound containing it, a polyisocyanate compound, and a chain extender and/or a curing agent as the case requires, and a known method selected from a one-shot method, a prepolymer method, etc. can be employed. The polyurethane elastomer of the present invention, is particularly preferably a thermoplastic polyurethane elastomer obtainable by using a polyol compound, a polyisocyanate compound and substantially only a chain extender.

The above one-shot method is a method for producing a polyurethane elastomer by reacting a polyol compound, a polyisocyanate compound, and a chain extender and/or a curing agent as the case requires, at the same time. The prepolymer method is a method for producing a polyurethane elastomer in such a manner that a polyol compound and an isocyanate compound are preliminarily reacted to produce an isocyanate-containing prepolymer, and such a prepolymer is further reacted with a polyol compound, and a chain extender and/or a curing agent. In view of the excellent molding processability, it is particularly preferred that the polyurethane elastomer of the present invention is produced by means of the prepolymer method.

Further, in the case of producing the polyurethane elastomer, particularly the thermoplastic polyurethane elastomer of the present invention, as a molecular weight modifier to increase the processability of the polyurethane elastomer by controlling the molecular weight of the polyurethane elastomer obtainable to be not so high, a terminal group terminator selected from diethylamine, dibutylamine, etc. may be used together with a chain extender and/or a curing agent.

Now, the process for producing the polyurethane elastomer of the present invention will be described, but the process for producing the polyurethane elastomer of the present invention is not limited thereto. Process for Producing Isocyanate-terminated Prepolymer

It is preferred that the isocyanate-terminated prepolymer to be used for producing the polyurethane elastomer of the present invention is produced by reacting the polyol compound and the polyisocyanate compound in a ratio of the isocyanate group/the hydroxyl group (molar ratio) of from 1.5 to 10, preferably from 2 to 6. When the molar ratio is at least 1.5, the viscosity of the isocyanate-terminated prepolymer obtainable does not tend to be too high, whereby it is possible to obtain excellent working efficiency. On the other hand, when the molar ratio is at most 10 so that the content of the isocyanate group will not be too large, it is possible to suppress foaming of the polyurethane elastomer obtainable in a case where the prepolymer is subsequently reacted with the chain extender and/or curing agent.

In the present invention, the content of the isocyanate group (mass%) in the isocyanate-terminated prepolymer is preferably from 1.5 to 10.0 mass%, more preferably from 1.5 to 9.0 mass%, particularly preferably from 2.0 to 8.0 mass%. When the content of the isocyanate group in the prepolymer is at least 1.5 mass%, the viscosity of the prepolymer can be kept low, whereby it is possible to secure the excellent working efficiency. Further, when the content of the isocyanate group is at most 10 mass%, it is possible to suppress foaming of the polyurethane elastomer obtainable, in a case where the above prepolymer is subsequently reacted with the chain extender and/or curing agent.

The isocyanate-terminated prepolymer can be produced by a known method. For example, it can be produced by reacting the polyol compound and the polyisocyanate compound in a dry nitrogen stream under heating at 60 to 100°C for 1 to 20 hours.

Then, the isocyanate-terminated prepolymer obtained as described above is reacted with the chain extender and/or curing agent to produce a thermoplastic or thermosetting polyurethane elastomer. With regard to the reaction of the above prepolymer with the chain extender and/or curing agent, the above prepolymer is reacted with desired chain extender and/or curing agent while the isocyanate index (number of total isocyanate group (mol)/number of total active hydrogen group (mol) $\times$ 100) is adjusted to be from 70 to 120, more preferably from 85 to 105, particularly preferably from 95 to 105.

The temperature for the reaction of the isocyanate-terminated prepolymer with the chain extender and/or curing agent, is preferably from 50 to 150°C. When the reaction temperature is at least 50°C, it is possible to prevent the reaction rate to be too slow, and when the reaction temperature is at most 150°C, it is possible to prevent a defect such that the raw material is cured without being mixed sufficiently and uniformly. Further, the reaction of the isocyanate-terminated prepolymer with the chain extender and/or curing agent can be carried out in a solvent. For example, the isocyanate-terminated prepolymer is produced in a solvent to obtain an isocyanate-terminated prepolymer solution, and the chain extender and/or curing agent is added to such a solution, whereby it is possible to obtain a solution containing the polyurethane elastomer. As the solvent, a known compound can be used. Urethane Reaction Catalyst

A known urethane reaction catalyst may be used for the reaction of the polyol compound and the polyisocyanate compound, and the reaction of the isocyanate-terminated prepolymer with the chain extender and/or curing agent, as mentioned above. The urethane reaction catalysts may, for example, be organic tin compounds such as dibutyltin dilaurate, dioctyltin dilaurate, dibutyltin octoate and tin 2-ethylhexanoate; iron compounds such as iron acetylacetonate and iron chloride; and tertiary amine type catalysts such as triethylamine and triethylene diamine, and among them, the organic tin compounds are preferred.

When the above urethane reaction catalyst is to be used, it is used in an amount of preferably from 0.0001 to 1.0 part by mass, particularly preferably from 0.001 to 0.01 part by mass, based on 100 parts by mass of the total amount of the isocyanate-terminated prepolymer, and the extender and/or curing agent. For example, in a case where the isocyanate-terminated prepolymer, and the chain extender and/or curing agent are reacted and cured in a mold to obtain a molded product, the urethane reaction catalyst is used in an amount of at least 0.0001 part by mass based on the reaction mixture, whereby the time until the molded product becomes ready to be released, can be shortened to an allowable time. Further, when such an amount is at most 0.1 part by mass, it is possible to secure a preferred pot life by suitably prolonging the curing reaction of the reaction mixture. Other Additives

The polyurethane elastomer of the present invention may contain one or more additives selected from the group consisting of the following filler, reinforcing material, stabilizer, flame retardant, releasing agent and antifungus agent. The filler or reinforcing material may, for example, be carbon black, aluminum hydroxide, calcium carbonate, titanium oxide, silica, glass, crushed bone, wood flour or fiber flakes. The stabilizer may, for example, be an antioxidant, a ultraviolet absorber or a light stabilizer. The flame retardant may, for example, be a chloroalkyl phosphate, dimethylmethyl phosphonate, ammonium polyphosphate or an organic bromine compound. The releasing agent may, for example, be wax, a soap or silicone oil. The antifungus agent may, for example, be pentachlorophenol, pentachlorophenol laurate or bis(tri-n-butyltin) oxide.

The polyurethane elastomer of the present invention may contain a plasticizer, but it preferably contains no plasticizer. Since the polyol (A) in the present invention is of low viscosity, the prepolymer obtainable by reacting it with the polyisocyanate compound is also of low viscosity, and thus can easily be handled, and further, it is possible to obtain the polyurethane elastomer with a low hardness without incorporating a plasticizer. Hardness of Polyurethane Elastomer

The polyurethane elastomer of the present invention can be obtained as mentioned above, and it is preferred that the hardness (Shore A hardness) by means of a type A durometer defined by JIS K 6253 is from 30 to 70. It is particularly preferably less than 70. In the method for producing a polyurethane elastomer of the present invention, it is possible to adjust the Shore A hardness of the polyurethane elastomer obtainable by adjusting the type and the ratio in the amount of the polyol compound and the isocyanate compound to be used, the molecular weight of the polyol compound, the average number of terminal hydroxyl groups of the polyol compound, the hard content of the polyurethane elastomer (proportion of the total amount of the polyisocyanate compound, the chain extender and the curing agent occupying in the mass of the polyurethane resin), etc. For example, it is possible to lower the Shore A hardness of the polyurethane elastomer obtainable, by lowering the hard content in the polyurethane elastomer, increasing the molecular weight of the polyol compound, and lowering the amount of the ester bond in the polyol compound. On the other hand, it is possible to increase the Shore A hardness of the polyurethane elastomer obtainable, by increasing the hard content, lowering the molecular weight of the polyol compound, and increasing the amount of the ester bond in the polyol compound. A person skilled in the art is able to obtain a polyurethane elastomer having a desired Shore A hardness by suitably adjusting the molecular weight and the molecular structure of the polyol compound, and the hard content of the polyurethane elastomer. Applied Product of Polyurethane Elastomer of The Present Invention

A method for producing a microceller polyurethane elastomer may, for example, be a method of adding a blowing agent selected from a small amount of HFC (hydrofluorocarbon) and water to a polyol compound, followed by reacting, a method of mixing air, nitrogen and carbon dioxide to a mixture of an isocyanate-terminated prepolymer, and a chain extender and/or a curing agent at the time of producing the polyurethane elastomer, followed by strongly stirring to foam it, or a method of mixing liquid carbon dioxide in a reactive mixture of the polyurethane elastomer resin. Water is a preferred foaming agent, and the amount of water to be used for obtaining the microceller polyurethane elastomer with a preferred density is within a range of preferably from 0.1 to 1.0 part by mass, particularly preferably from 0.2 to 0.8 part by mass, based on 100 parts by mass of the total amount of the polyol compound, the polyisocyanate compound, and the chain extender and/or curing agent as the case requires, as raw materials for the polyurethane elastomer.

In the case of producing the polyurethane elastomer by a prepolymer method using the chain extender and/or curing agent, it can be produced in such a manner that a reaction mixture containing the isocyanate-terminated prepolymer produced from the polyol compound and the polyisocyanate compound of the present invention, the chain extender and/or curing agent, and if necessary, additives selected from the group consisting of a filler, a reinforcing material, a stabilizer, a flame retardant, a mold-releasing agent and an antifungus agent, and materials optionally selected from a foaming agent and a pigment, is strongly stirred and then poured into a mold having a suitable shape, extruded or deposited on a moving belt for curing. It is possible to obtain a thermoplastic polyurethane elastomer most commonly by adjusting all of the number of functional groups of the polyol compound as a raw material, the number of functional groups of the polyisocyanate compound and the number of functional groups of the chain extender and/or curing agent, to be bifunctional. Such a polyurethane elastomer is pulverized or pelletized to be used as a raw material, and then subjected to a method such as injection molding or blow molding using an extruder or other machines, whereby it is possible to produce a variety of products.

The polyurethane elastomer of the present invention is excellent in the tensile strength, the heat resistance and the elongation at break, even in the case of a low hardness. Accordingly, the polyurethane elastomer of the present invention is extremely useful for applications which are required to have both low hardness and high strength, such as molds for resin molding; various rollers for business equipments such as sheet feed rollers, sheet discharge rollers, transfer rollers, development rollers or charging rollers, various blades for screen printing, etc.; sealing materials; vibration absorbers; and shock absorbers.

EXAMPLES

Now, the present invention will be described in further detail with reference to Examples. However it should be understood that the present invention is by no means restricted to such specific Examples.

PRODUCTION EXAMPLE 1 (preparation of polyester ether diol a1 obtainable by random copolymerization of caprolactone and propylene oxide with polyoxypropylene diol)

Into a pressure resistant reactor equipped with a stirrer and a nitrogen introduction tube, 2,000 g of polyoxypropylene diol having a hydroxyl value of 160 mgKOH/g was put as an initiator. Then, 9.0 g of zinc hexacyanocobaltate-tert-butyl alcohol complex (DMC-TBA complex) was added as a catalyst, and further 4,000 g of a mixture having propylene oxide and ε-caprolactone mixed in a ratio of 50/50 (molar ratio) was slowly added to carry out the reaction for 7 hours at 150°C in a nitrogen atmosphere. After termination of the decrease in the internal pressure of the reactor, unreacted raw materials were deaerated and recovered under reduced pressure, but no ε-caprolactone and propylene oxide were recovered, and therefore the raw materials were confirmed to be reacted. Then, the product was taken out from the reactor to obtain a polyester ether diol a1 (hydroxyl value: 55.8 mgKOH/g) having caprolactone and propylene oxide copolymerized to terminals of polyoxypropylene diol. From the results of measurement of $^1$H-NMR of this polyester ether diol, it was found that such a diol has a random copolymerization chain of ε-caprolactone and propylene oxide.

PRODUCTION EXAMPLE 2 (preparation of polyester ether diol a2 obtainable by random copolymerization of caprolactone and propylene oxide with polyoxypropylene diol)

Into a pressure resistant reactor equipped with a stirrer and a nitrogen introduction tube, 1,905 g of polyoxypropylene diol having a hydroxyl value of 56.1 mgKOH/g was put as an initiator. Then, 6.2 g of a DMC-TBA complex was added as a catalyst, and further, 2,295 g of a mixture having propylene oxide and ε-caprolactone mixed in a ratio of 66/34 (molar ratio) was slowly added to carry out the reaction for 7 hours at 150°C in a nitrogen atmosphere. After termination of the decrease in the internal pressure of the reactor, unreacted raw materials were deaerated and recovered under reduced pressure, but no ε-caprolactone and propylene oxide were recovered, and therefore the raw materials were confirmed to be reacted. Then, the product was taken out from the reactor to obtain a polyester ether diol a2 (hydroxyl value: 25.8 mgKOH/g) having caprolactone and propylene oxide copolymerized to terminals of polyoxypropylene diol. From the results of measurement of [1]N-NMR of this polyester ether diol, it has been found that such a diol has a random copolymerization chain of ε-caprolactone and propylene oxide.

PRODUCTION COMPARATIVE EXAMPLE 1 (preparation of polyester ether diol b obtainable by block-addition of caprolactone to terminals of polyoxypropylene diol)

Into a pressure resistant reactor equipped with a stirrer and a nitrogen introduction tube, 1,400 g of polyoxypropylene diol having a hydroxyl value of 55.1 mgKOH/g was put as an initiator. Then, 0.016 g of tetrabutoxytitane was added thereto, and further 420 g of ε-caprolactone was added to carry out the reaction for 7 hours at 170°C under nitrogen atmosphere. The reaction product was measured by gel permeation chromatography (GPC) to confirm that no unreacted ε-caprolactone remained, and then the product was taken out from the reactor to obtain polyester ether diol b (hydroxyl value: 42.3 mgKOH/g) having caprolactone added to terminals of the above polyoxypropylene diol.

PRODUCTION EXAMPLE 3 (preparation of polyol a3 obtainable by random copolymerization of caprolactone and ethylene oxide with polyoxytetramethylene diol)

Into a pressure resistant reactor equipped with a stirrer and a nitrogen introduction tube, 1,961 g of polyoxytetramethylene diol having a hydroxyl value of 112.2 mgKOH/g was put as an initiator. Then, 4.0 g of a DMC-TBA complex was added as a catalyst, and further 2,039 g of a mixture having ethylene oxide and ε-caprolactone mixed in a ratio of 39/61 (molar ratio) was slowly added to carry out the reaction for 7 hours at 140°C in a nitrogen atmosphere. After termination of the decrease in the internal pressure of the reactor, unreacted raw materials were deaerated and recovered under reduced pressure, but no ε-caprolactone and ethylene oxide were recovered, and therefore the raw materials were confirmed to be reacted. Then, the product was taken out from the reactor to obtain a polyol a3 (hydroxyl value: 54.3 mgKOH/g) having caprolactone and ethylene oxide polymerized to terminals of polyoxytetramethylene diol. From the results of measurement of $^1$H-NMR of this polyol, it has been found that such a diol has a random copolymerization chain of ε-caprolactone and ethylene oxide.

PRODUCTION EXAMPLE 4 (preparation of polyol diol a4 obtainable by random copolymerization of caprolactone and propylene oxide with polycaprolactone diol)

Into a pressure resistant reactor equipped with a stirrer and a nitrogen introduction tube, 714 g of polycaprolactone diol having a hydroxyl value of 112.0 mgKOH/g was put as an initiator. Then, 6.0 g of a DMC-TBA complex was added as a catalyst, and further 2,214 g of a mixture having propylene oxide and ε-caprolactone mixed in a ratio of 66/34 (molar ratio) was slowly added to carry out the reaction for 7 hours at 140˚C in a nitrogen atmosphere. After termination of the decrease in the internal pressure of the reactor, unreacted raw materials were deaerated and recovered under reduced pressure, but no ε-caprolactone and propylene oxide were recovered, and therefore the raw materials were confirmed to be reacted. Then, the product was taken out from the reactor to obtain a polyol diol a4 (hydroxyl value: 27.3 mgKOH/g) having caprolactone and propylene oxide polymerized to terminals of polyoxypropylene diol.

From the results of measurement of $^1$H-NMR of this polyol diol, it has been found that such a diol has a random copolymerization chain of ε-caprolactone and propylene oxide.

PRODUCTION EXAMPLE 5 (preparation of polyol diol a5 obtainable by random copolymerization of caprolactone and propylene oxide with polycarbonate diol)

Into a pressure resistant reactor equipped with a stirrer and a nitrogen introduction tube, polycarbonate diol (NIPPOLLAN 981, 1,6-hexanediol type, manufactured by NIPPON POLYURETHANE INDUSTRY CO., LTD.) having a hydroxyl value of 112.1 mgKOH/g was put as an initiator. Then, 3.9 g of a DMC-TBA complex was added as a catalyst, and further 2,000 g of a mixture having propylene oxide and ε-caprolactone mixed in a ratio of 80/20 (molar ratio) was slowly added to carry out the reaction for 7 hours at 130˚C in a nitrogen atmosphere. After termination of the decrease in the internal pressure of the reactor, an unreacted raw material was deaerated and recovered under reduced pressure, no ε-caprolactone and propylene oxide were recovered, and therefore the raw materials were confirmed to be reacted. Then, the product was taken out from the reactor to obtain a polyol diol a5 (hydroxyl value: 58.1 mgKOH/g) having caprolactone and propylene oxide further copolymerized to terminals of polyoxypropylene diol.

From the results of measurement of $^1$H-NMR of this polyol diol, it has been found that such a diol has a random copolymerization chain of ε-caprolactone and propylene oxide.

Table 1 shows the initiators which are employed for production of the polyol compounds produced in the above Production Examples 1 to 5 and Production Comparative Example 1, the ratio in the amount of alkylene oxide to caprolactone, the hydroxyl value of the polyol compound obtained, the molecular weight as calculated by hydroxyl value, Mw/Mn (weight average molecular weight/number average molecular weight), the total unsaturation degree, and the value obtained by deducting from the molecular weight as calculated by hydroxyl value, the molecular weight of the initiator and then dividing the remaining molecular weight by the number of functional groups of the initiator.

In the following description and Tables, PO represents propylene oxide, EO ethylene oxide, and CL caprolactone. Further, PPG represents polyoxypropylene diol, PTMG polyoxytetramethylene diol, PCL polycaprolactone diol, PCD polycarbonate diol.

TABLE 1

| | Production Ex. 1 | Production Ex. 2 | Production Comp. Ex. 1 | Production Ex. 3 | Production Ex. 4 | Production Ex. 5 |
|---|---|---|---|---|---|---|
| Name of polyol compound | a1 | a2 | b | a3 | a4 | a5 |
| Type of initiator | PPG | PPG | PPG | PTMG | PCL | PCD |
| Hydroxyl value of initiator (mgKOH/g) | 160 | 56.1 | 55.1 | 112.2 | 112 | 112.1 |
| Molar ratio of PO/CL | 50/50 | 66/34 | 0/100 | - | 66/34 | 80/20 |
| Molar ratio of EO/CL | - | - | - | 39/61 | - | - |
| Hydroxyl value (mgKOH/g) | 55.8 | 25.8 | 42.3 | 54.3 | 27.3 | 58.1 |

(continued)

|  | Production Ex. 1 | Production Ex. 2 | Production Comp. Ex. 1 | Production Ex. 3 | Production Ex. 4 | Production Ex. 5 |
|---|---|---|---|---|---|---|
| Molecular weight as calculated by hydroxyl value | 2,010 | 4,340 | 2,650 | 2,066 | 4,110 | 1,931 |
| Molecular weight as calculated by hydroxyl value per hydroxyl group | 1,050 | 2,170 | 1,325 | 1,033 | 2,055 | 966 |
| Mw/Mn | 1.07 | 1.09 | 1.21 | 1.31 | 1.11 | 1.44 |
| Total unsaturation degree (meq/g) | 0.005 | 0.019 | 0.019 | 0.001 | 0.0047 | 0.0099 |
| (Molecular weight as calculated by hydroxyl value - molecular weight of initiator)/ number of functional groups of initiator | 655 | 1,170 | 308 | 533 | 1,554 | 465 |
| Viscosity (mPa·s/ 25˚C) | 870 | 3,600 | Solid | Solid | Solid | Solid |

Production of polyurethane elastomer

By using the above polyol compounds a1, a2, a3, a4 and a5, respective polyurethane elastomers P1, P2, P3, P4 and P5 were produced. Further, for comparison, Q1 was produced by using the polyol compound b, Q2 was produced by using PPG (hydroxyl value: 55.1 mgKOH/g), Q3 was produced by using PCL (hydroxyl value: 56.5 mgKOH/g), Q4 was produced by using a mixture having PCL (hydroxyl value: 56.5 mgKOH/g) and PPG (hydroxyl value: 55.1 mgKOH/g) mixed in a mass ratio of 50:50, Q5 was produced by using PTMG (hydroxyl value: 55.6 mgKOH/g), Q6 was produced by using a mixture having PTMG (hydroxyl value: 55.6 mgKOH/g) and PPG (hydroxyl value: 55.1 mgKOH/g) mixed in a mass ratio of 50:50, Q7 was prepared by using PCD (NIPPOLLAN 980, 1,6-hexanediol type, manufactured by NIPPON POLYURETHANE INDUSTRY CO., LTD., hydroxyl value: 55.8 mgKOH/g), and Q8 was prepared by using a mixture having PCD (NIPPOLLAN 980, manufactured by NIPPON POLYURETHANE INDUSTRY CO., LTD., hydroxyl value: 56.5 mgKOH/g) and PPG (hydroxyl value: 55.1 mgKOH/g), mixed in a mass ratio of 30:70.
The polyurethane elastomer was produced as follows. In the reactor, 750 g of one of the above polyol compounds and 210 g of p-MDI (diphenylmethane diisocyanate) were mixed, and reacted for 4 hours under heating at 80˚C to obtain an isocyanate-terminated prepolymer. Then, to the isocyanate-terminated prepolymer obtained, 40 g of 1,4-butanediol was added as a chain extender, and the mixture thus obtained was put into a stainless steel pallet and further reacted for 6 hours at 130˚C to obtain a polyurethane elastomer having a hard content of 25% (Example P1). Here, the hard content is a value (%) calculated by the formula of (mass of p-MDI + mass of 1,4-butanediol)/(mass of p-MDI + mass of 1,4-butanediol + mass of polyol compound) $\times$ 100 (%).

Urethane resins P2 to P5 (Examples) and Q1 to Q8 (Comparative Examples) having a hard content of 25% were obtained in the same manner except that blends shown in Table 2 were employed.

TABLE 2

| | | Examples | | | | | Comparative Examples | | | | | | | |
|---|---|---|---|---|---|---|---|---|---|---|---|---|---|---|
| | | P1 | P2 | P3 | P4 | P5 | Q1 | Q2 | Q3 | Q4 | Q5 | Q6 | Q7 | Q8 |
| Polyol (g) | Polyol (a1) | 750 | | | | | | | | | | | | |
| | Polyol (a2) | | 750 | | | | | | | | | | | |
| | Polyol (a3) | | | 750 | | | | | | | | | | |
| | Polyol (a4) | | | | 750 | | | | | | | | | |
| | Polyol (a5) | | | | | 750 | | | | | | | | |
| | Polyol (b) | | | | | | 750 | | | | | | | |
| | PPG | | | | | | | 750 | | | | | | |
| | PCL | | | | | | | | 750 | | | | | |
| | PCL/PPG | | | | | | | | | 750 | | | | |
| | PTMG | | | | | | | | | | 750 | | | |
| | PTMG/PPG | | | | | | | | | | | 750 | | |
| | PCD | | | | | | | | | | | | 750 | |
| | PCD/PPG | | | | | | | | | | | | | 750 |
| Poly-isocyanate (g) | p-MDI | 210.0 | 196.3 | 208.9 | 196.9 | 210.6 | 203.6 | 209.3 | 209.9 | 209.3 | 209.5 | 209.4 | 209.6 | 209.7 |
| Chain extender (g) | 1,4-butanediol | 40.0 | 53.7 | 41.0 | 53.1 | 39.4 | 46.4 | 40.7 | 40.1 | 40.7 | 40.5 | 40.6 | 40.4 | 40.3 |

The above polyurethane elastomer obtained was pulverized into flakes by using a grinder. Then, by using an extruder, the above flake-form polyurethane elastomer was melted at a die temperature of from 180 to 210˚C and pelletized by a pelletizer. By using an extruder, the above pelletized resin composition was molded into a film-form having a thickness of 100 μm at a die temperature of from 180 to 210˚C.

At that time, the moldability was evaluated as follows. Namely, a case wherein polyurethane elastomer pellets have substantially no tackiness and can readily be introduced into an extruder, was rated as ○; a case wherein polyurethane elastomer pellets have slight tackiness and some pellets brought about blocking, and thus they can hardly be introduced into an extruder, was rated as △; and a case wherein polyurethane elastomer pellets have strong tackiness and pellets brought about blocking with each other, and thus they can hardly be introduced into an extruder, was rated as ×. The results are shown in Table 3.

Evaluation of Polyurethane Elastomer

By using the above film-form polyurethane elastomer, measurements of Shore A harness and mechanical properties, a heat resistance test, and a hot water resistance test were carried out. Measuring methods and evaluation standards are respectively as follows. The results are shown in Table 3.

(2) Shore A hardness: The measurement was carried out by a hardness test by a type A durometer defined by JIS K 6253.
(3) Mechanical properties: In accordance with JIS K7311, 100% modulus (M100, MPa), 300% modulus (M300, MPa), tensile strength (Ts, MPa), elongation at break (%) and tear strength (kN/m) were measured.
(4) Heat resistance test: In the presence of air, the polyurethane elastomer film was left to stand for one week and two weeks in an oven at a temperature of 120˚C, whereupon the tensile strength (Ts) was measured. The tensile strength retention against the tensile strength (Ts) of the polyurethane elastomer sheet before carrying out such a heating test, was obtained. Further, symbol × indicates a case where it was impossible to measure mechanical properties since such a film was melted and remarkably deteriorated by heat, and symbol △ indicates a case where it was impossible to measure mechanical properties since such a film was melted and partly deteriorated by heat, but it was considered possible to measure the mechanical properties if the temperature was further lowed.
(5) Hot water resistance test: The tensile strength (Ts) was measured after the polyurethane elastomer film was immersed for one week in a hot water at 80˚C. The tensile strength retention against the tensile strength (Ts) of the polyurethane elastomer before carrying out such a hydrolysis test, was obtained.

In Example Q2, deterioration by heat was remarkable, and it was impossible to form the polyurethane elastomer into a film. Therefore, it was impossible to carry out the subsequent tests.

TABLE 3

| | Examples | | | | | Comparative Examples | | | | | | | |
|---|---|---|---|---|---|---|---|---|---|---|---|---|---|
| | P1 | P2 | P3 | P4 | P5 | Q1 | Q2 | Q3 | Q4 | Q5 | Q6 | Q7 | Q8 |
| Polyol | a1 | a2 | a3 | a4 | a5 | b | PPG | PCL | PCL/PPG | PTMG | PTMG /PP | PCD | PCD/PPG |
| (Initiator) | PPG | PPG | PTMG | PCL | PCD | | | | | | | | |
| Moldability | △ | ○ | ○ | ○ | ○ | △ | × | ○ | ○ | ○ | △ | ○ | ○ |
| Shore A hardness | 64 | 59 | 63 | 66 | 65 | 66 | × | 70 | 67 | 78 | 68 | 73 | 61 |
| (Mechanical properties) | | | | | | | | | | | | | |
| M100 (MPa) | 3.6 | 2.7 | 2.5 | 3.2 | 2.0 | 2.3 | × | 2.8 | 1.9 | 3.1 | 2.1 | 3.9 | 1.6 |
| M300 (MPa) | 7.6 | 5.1 | 5.6 | 6.3 | 4.1 | 4.7 | × | 7.9 | 4.2 | 7.2 | 4.1 | 42 | 3.5 |
| Ts (MPa) | 22 | 13 | 47 | 35 | 31 | 14 | × | 63 | 42 | 51 | 30 | 62 | 26 |
| Elongation at break (%) | 640 | 950 | 650 | 780 | 680 | 790 | × | 550 | 810 | 580 | 760 | 350 | 740 |
| Tear strength (kN/m) | 39 | 26 | 45 | 54 | 33 | 26 | × | 50 | 45 | 57 | 45 | 53 | 27 |
| (Heat resistance test) | | | | | | | | | | | | | |
| Ts after one 120°C (MPa) week × | 19.6 | 6.00 | △ | 24.2 | 15.8 | 6.50 | × | 43.7 | △ | × | × | 55.2 | 5.20 |
| Ts maintaining rate (%) | 88 | 47 | △ | 69 | 51 | 47 | × | 69 | △ | × | × | 89 | 20 |
| Ts after two weeks × 120°C (MPa) | 12.0 | 4.10 | △ | 14.7 | 11.5 | 3.50 | × | 55.4 | △ | × | × | 55.2 | × |
| Ts maintaining rate (%) | 54 | 32 | △ | 42 | 37 | 25 | × | 88 | △ | × | × | 89 | × |
| (Hot water resistance test) | | | | | | | | | | | | | |
| Ts after one week × in a hot water at 80°C (MPa) | 14.3 | 11.3 | 30.6 | 30.1 | 30.1 | 13.2 | × | 44.9 | 30.0 | 51.0 | 30.0 | 50.8 | 8.8 |
| Ts maintaining rate (%) | 64 | 73 | 65 | 77 | 97 | 94 | × | 71 | 71 | 100 | 100 | 82 | 34 |

From the results shown in Table 3, the elastomer in each of Examples P1 to P5 has a Shore A hardness of from 59 to 64, and thus the flexibility is found to be high. Especially, the Shore A hardness of P3 to P5 using a polyol employing a crystalline polyol as an initiator is also 62 to 66, and thus the flexibility is found to be extremely high. On the other hand, the polyurethane elastomer using the crystalline polyol in Comparative Examples Q3, Q5 and Q7 has a high Shore A hardness of at least 70, and thus the elongation at break is found to be low.

The polyurethane elastomer in Example P1 is excellent in the tensile strength and the heat resistance as compared with the polyurethane elastomer in Comparative Example Q1, which has almost the same Shore A hardness. P1 and P2 are far improved in the moldability, the heat resistance and the mechanical properties as compared with Q2. Further, P3 is not necessarily sufficient in view of the heat resistance, but is found to be improved as compared with Q5 where PTMG is used or Q6 where the mixture of PTMG and PPG is used. Also, it is found that the low hardness can be achieved. Q6 where PTMG and PPG are mixed, has a lower Shore A hardness of 68, but is inferior to P3 in the heat resistance.

It has been found that P4 has a low hardness as compared with Q3, and also maintains mechanical properties. Further, Comparative Example Q4 where PPG and PCL are mixed has a low Shore A hardness of 67, but is inferior to P4 in the heat resistance.

It has been found that P5 has a low hardness as compared with Q7, and also maintains mechanical properties. Further, Comparative Example Q8 where PPG and PCD are mixed has a low hardness, but is inferior to P5 in the heat resistance.

From the foregoing results, it has been found that even when the polyurethane elastomer produced by the production method of the present invention is a flexible one having a low hardness, the moldability, the heat resistance and the hydrolysis resistance are excellent.

INDUSTRIAL APPLICABILITY

The polyurethane elastomer obtainable by the present invention has high flexibility and excellent mechanical properties, and yet is excellent in heat resistance and hydrolysis resistance, and thus it is widely useful for various applications such as molds for resin molding; various rollers for business equipments such as sheet feed rollers, sheet discharge rollers, transfer rollers, development rollers and charging rollers; various blades for screen printing, etc.; sealing materials; vibration absorbers; and shock absorbers.

The entire disclosures of Japanese Patent Application No. 2004-161664 filed on May 31, 2004 and Japanese Patent Application No. 2004-305397 filed on October 20, 2004 including specifications, claims, drawings and summaries are incorporated herein by reference in their entireties.

**Claims**

1. A method for producing a polyurethane elastomer, which comprises reacting a polyol compound and a polyisocyanate compound, **characterized by** using, as all or part of the above polyol compound, a polyester ether polyol (A) obtainable by ring-opening polymerization of a mixture of an alkylene oxide and a lactone monomer with an initiator.

2. A method for producing a polyurethane elastomer, which comprises reacting a polyol compound, a polyisocyanate compound, and a chain extender and/or a curing agent, **characterized by** using, as all or part of the above polyol compound, a polyester ether polyol (A) obtainable by ring-opening polymerization of a mixture of an alkylene oxide and a lactone monomer with an initiator.

3. A method for producing a polyurethane elastomer, which comprises reacting a polyol compound and a polyisocyanate compound, **characterized by** using, as all or part of the above polyol compound, a polyester ether polyol (A) obtainable by ring-opening polymerization of a mixture of an alkylene oxide and a lactone monomer with an initiator of at least one polyol selected from the group consisting of the following (p), (q) and (r):

   (p): polyoxytetramethylene polyol,
   (q): polyoxyethylene polyol and
   (r): a polyol other than (p) and (q), which is solid at room temperature and has a molecular weight as calculated by hydroxyl value per hydroxyl group of from 150 to 5,000.

4. A method for producing a polyurethane elastomer, which comprises reacting a polyol compound, a polyisocyanate compound, and a chain extender and/or a curing agent, **characterized by** using, as all or part of the above polyol compound, a polyester ether polyol (A) obtainable by ring-opening polymerization of a mixture of an alkylene oxide and a lactone monomer with an initiator of at least one polyol selected from the group consisting of the following (p), (q) and (r):

(p): polyoxytetramethylene polyol,
(q): polyoxyethylene polyol and
(r): a polyol other than (p) and (r), which is solid at room temperature and has a molecular weight as calculated by hydroxyl value per hydroxyl group of from 150 to 5,000.

5. The method according to Claim 3 or 4, **characterized by** using, as the above polyol (r), at least one member selected from the group consisting of a polyester polyol and a polycarbonate polyol.

6. The method according to any one of Claims 3 to 5, wherein the polyol (p) or (q) has a molecular weight as calculated by hydroxyl value per hydroxyl group of from 150 to 5,000.

7. The method for producing a polyurethane elastomer according to any one of Claims 1 to 6, wherein, in the above ring-opening polymerization, (the molar amount of the above alkylene oxide/the molar amount of the above lactone monomer) = 5/95 to 95/5.

8. The method according to any one of Claims 1 to 7, wherein the ring-opening polymerization of a mixture of an alkylene oxide and a lactone monomer is carried out in the presence of a composite metal cyanide complex catalyst.

9. The method according to any one of Claims 1 to 8, wherein the weight average molecular weight (Mw)/the number average molecular weight (Mn) of the polyester ether polyol is from 1.02 to 2.00.

10. The method according to any one of Claims 1 to 9, wherein the polyester ether polyol has a total unsaturation degree of at most 0.07.

11. The method according to any one of Claims 1 to 5, wherein the polyester ether polyol has a molecular weight as calculated by hydroxyl value per hydroxyl group of from 170 to 16,500.

12. A polyurethane elastomer produced by the method as defined in any one of Claims 1 to 11, **characterized in that** its hardness by a type A durometer defined by JIS K 6253 is from 30 to 70.

**INTERNATIONAL SEARCH REPORT**

| International application No. |
| --- |
| PCT/JP2005/009906 |

| A. CLASSIFICATION OF SUBJECT MATTER |
| --- |
| Int.Cl$^7$  C08G18/42, 18/66//C08G63/664 |

According to International Patent Classification (IPC) or to both national classification and IPC

| B. FIELDS SEARCHED |
| --- |
| Minimum documentation searched (classification system followed by classification symbols)<br>Int.Cl$^7$  C08G18/42, 18/66//C08G63/664 |

Documentation searched other than minimum documentation to the extent that such documents are included in the fields searched

| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

| C. DOCUMENTS CONSIDERED TO BE RELEVANT |

| Category* | Citation of document, with indication, where appropriate, of the relevant passages | Relevant to claim No. |
| --- | --- | --- |
| A | JP 9-208653 A  (Kuraray Co., Ltd.),<br>12 August, 1997 (12.08.97),<br>(Family: none) | 1-12 |
| A | JP 7-149883 A  (Dainippon Ink And Chemicals, Inc.),<br>13 June, 1995 (13.06.95),<br>(Family: none) | 1-12 |
| A | JP 62-145274 A  (The Yokohama Rubber Co., Ltd.),<br>29 June, 1987 (29.06.87),<br>(Family: none) | 1-12 |
| A | JP 60-135422 A  (Asahi Glass Co., Ltd.),<br>18 July, 1985 (18.07.85),<br>(Family: none) | 1-12 |

☒ Further documents are listed in the continuation of Box C.　　　☐ See patent family annex.

| * | Special categories of cited documents: |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 06 September, 2005 (06.09.05) | 27 September, 2005 (27.09.05) |

| Name and mailing address of the ISA/<br>Japanese Patent Office | Authorized officer |
| --- | --- |
| Facsimile No. | Telephone No. |

Form PCT/ISA/210 (second sheet) (January 2004)

**EP 1 752 481 A1**

### INTERNATIONAL SEARCH REPORT

International application No.

PCT/JP2005/009906

| C (Continuation). | DOCUMENTS CONSIDERED TO BE RELEVANT | |
|---|---|---|
| Category* | Citation of document, with indication, where appropriate, of the relevant passages | Relevant to claim No. |
| A | JP 58-59213 A (Daicel Chemical Industries, Ltd.), 08 April, 1983 (08.04.83), (Family: none) | 1-12 |
| A | JP 55-160016 A (Dainichiseika Color & Chemicals Mfg. Co., Ltd.), 12 December, 1980 (12.12.80), (Family: none) | 1-12 |
| A | JP 2004-27054 A (Asahi Glass Co., Ltd.), 29 January, 2004 (29.01.04), (Family: none) | 1-12 |
| A | JP 2003-504468 A (The Dow Chemical Co.), 04 February, 2003 (04.02.03), & WO 01/04183 A & EP 1200506 A & US 6429342 B | 1-12 |
| A | US 5032671 A (Stephen D. Harper), 16 June, 1991 (16.06.91), (Family: none) | 1-12 |

Form PCT/ISA/210 (continuation of second sheet) (January 2004)

21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6502674 A
- JP 7504702 A
- JP 7507344 A
- JP 1056088 A
- JP 2001500167 A
- JP 55160016 A
- JP 58059213 A
- JP 1157516 A
- JP 6206995 A
- US 5032671 A
- JP 2003504468 A
- JP 2004161664 A
- JP 2004305397 A